# EUROPEAN PATENT SPECIFICATION

(11) **EP 4 059 829 B1**
(45) Date of publication and mention of the grant of the patent: **18.11.2026**
(21) Application number: 22156608.6
(22) Date of filing: 14.02.2022
(51) Int. Cl.: B63B 49/00, G01C 21/20

(54) **SEA ROUTE EVALUATION DEVICE, SEA ROUTE EVALUATION PROGRAM, AND SEA ROUTE EVALUATION METHOD**
VORRICHTUNG, PROGRAMM UND VERFAHREN ZUR BEWERTUNG VON SEEWEGEN
DISPOSITIF D'ÉVALUATION DE ROUTE MARITIME, PROGRAMME D'ÉVALUATION DE ROUTE MARITIME ET PROCÉDÉ D'ÉVALUATION DE ROUTE MARITIME

(30) Priority: 17.03.2021 JP 2021043865
(43) Date of publication of application: 21.09.2022
(73) Proprietor: Sumitomo Heavy Industries Marine & Engineering Co., Ltd., Tokyo 141-6025 (JP)
(72) Inventor: KAWAMOTO, Kodai, 19, Natsushima-cho, Yokosuka-shi, Kanagawa, 237-8555, (JP)
(74) Representative: Louis Pöhlau Lohrentz

(56) References cited:
- EP-B1- 3 209 969
- US-A1- 2008 133 131
- US-A1- 2010 185 471
- US-A1- 2014 200 806
- ANONYMOUS: "Opisometer - Wikipedia", WIKIPEDIA, 21 January 2021 (2021-01-21), pages 1 - 2, XP055944468, Retrieved from the Internet <URL:https://en.wikipedia.org/w/index.php?title=Opisometer&oldid=1001717199#cite_note-3> [retrieved on 20220720]

## Description

### BACKGROUND OF THE INVENTION

### Field of the Invention

The present invention relates to a sea route evaluation device, a sea route evaluation program, and a sea route evaluation method.

### Description of Related Art

There has been known a device described in Japanese Unexamined Patent Publication No. 2007-57499 as a conventional device that searches for a sea route. The device searches for the optimal sea route based on ship data and sea weather data. A user can adjust the sea route that the device side has searched for. United States Patent Publication No. 2010/185471 and United States Patent Application Publication No. 2008/133131 disclose a method and apparatus for analyzing ship performance.

### SUMMARY OF THE INVENTION

Here, in the device as described above, the sea route created by the device is adjusted by the user, but the sea route conceived by the user is not evaluated. In response to this, it has been required to increase the motivation of the user himself/herself to find the optimal sea route by evaluating the sea route created by the user.

In that regard, an object of the present invention is to provide a sea route evaluation device, a sea route evaluation program, and a sea route evaluation method that can increase the motivation of a user to create a sea route.

The invention is set out in the appended set of claims.

There is provided a sea route evaluation device according to the claim 1.

The sea route evaluation device includes the evaluation unit that performs the evaluation of the sea route acquired by the created sea route acquisition unit. Accordingly, the evaluation unit can evaluate the sea route of the ship created by the user. Further, the evaluation unit can output the evaluation of the sea route to the user. Therefore, the user can easily identify the good or bad of the sea route created by himself/herself by referring to the evaluation of the sea route. In this way, the user identifies the evaluation of the sea route in an easy-to-understand manner, so that it is possible to increase the motivation of the user to create the sea route.

The sea route evaluation device further includes a comparative sea route acquisition unit that acquires at least one of a sea route created by artificial intelligence and a sea route created in the past, as a comparative sea route, in which the evaluation unit compares the comparative sea route with the sea route created by the user to output the evaluation of the sea route to the user. With this, the user can identify the good or bad of the sea route created by himself/herself as compared with the sea route created by artificial intelligence or the sea route created in the past.

The sea route evaluation device may further include a navigation assistance information computation unit that computes navigation assistance information based on an evaluation result by the evaluation unit, and outputs a comment regarding the sea route based on the score evaluated by the evaluation unit, in which the comment includes the navigation assistance information about which of the sea route or the comparative sea route has a higher score. With this, the user can acquire the navigation assistance information based on the evaluation result, for the sea route created by himself/herself.

There is provided a sea route evaluation program according to claim 3.

There is provided a sea route evaluation method according to claim 4.

With the sea route evaluation program and the sea route evaluation method according to the present invention, the same operations and effects as those of the above-described sea route evaluation device can be obtained.

According to the present invention, it is possible to provide a sea route evaluation device, a sea route evaluation program, and a sea route evaluation method that can increase the motivation of a user to create a sea route.

### BRIEF DESCRIPTION OF THE DRAWINGS

FIG. 1 is a block diagram showing a sea route evaluation device according to an embodiment of the present invention.
FIG. 2 is a conceptual diagram showing a state in which a created sea route and a comparative sea route are compared with each other and are evaluated.
FIG. 3 is a table showing an example of an evaluation result.
FIG. 4 is a table showing another example of the evaluation result.
FIG. 5 is a flowchart showing processing contents of a sea route evaluation method according to the embodiment of the present invention.

### DETAILED DESCRIPTION OF THE INVENTION

Hereinafter, a preferred embodiment of the present invention will be described in detail with reference to the accompanying drawings. In the following description, the same or corresponding portions will be designated by the same reference numerals, and duplicate description will not be repeated.

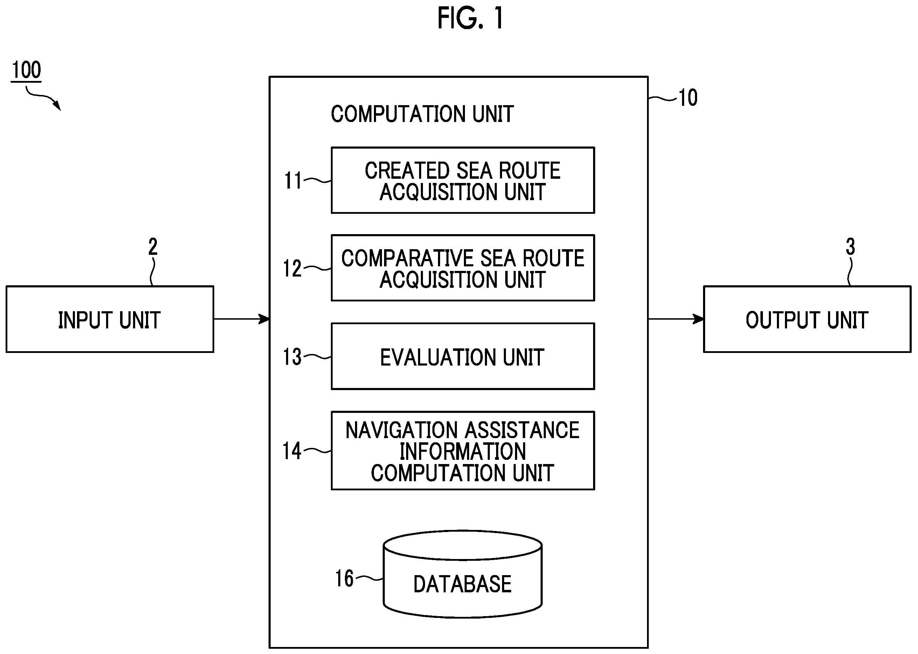

FIG. 1 is a block diagram showing a sea route evaluation device 100 according to an embodiment of the present invention. The sea route evaluation device 100 is a device that evaluates the sea route of a ship created by a user. The sea route evaluation device 100 is provided in, for example, a ship. As shown in FIG. 1, the sea route evaluation device 100 includes an input unit 2, an output unit 3, and a computation unit 10.

The input unit 2 is a user interface that is used for the user to input various information to the computation unit 10. The input unit 2 is formed of an input device such as a keyboard, a touch panel, a mouse, and a microphone. The output unit 3 is a user interface that is used to output various information to the user based on the signal from the computation unit 10. The output unit 3 is formed of an output device such as a monitor and a speaker. In the present embodiment, the user operates the input unit 2 to create a sea route indicating a route from the departure point to the destination for navigation. In this case, the user may refer to the departure point, destination, and various other conditions that are output to the output unit 3.

The computation unit 10 is a device that performs various computation for sea route evaluation. The computation unit 10 includes a processor, a memory, a storage, and a communication interface, and is formed as a general computer. The processor is a computation device such as a central processing unit (CPU). The memory is a storage medium such as a read only memory (ROM) or a random access memory (RAM). The storage is a storage medium such as a hard disk drive (HDD). The communication interface is a communication device that realizes data communication. The processor controls the memory, the storage, and the communication interface in an integrated manner, and realizes the function of the computation unit 10, which will described be later. The computation unit 10 realizes various functions by, for example, loading a program stored on the ROM into the RAM and executing the program loaded in the RAM using the CPU. The computation unit 10 may be formed of a plurality of computers. The computation unit 10 includes a created sea route acquisition unit 11, a comparative sea route acquisition unit 12, an evaluation unit 13, a navigation assistance information computation unit 14, and a database 16.

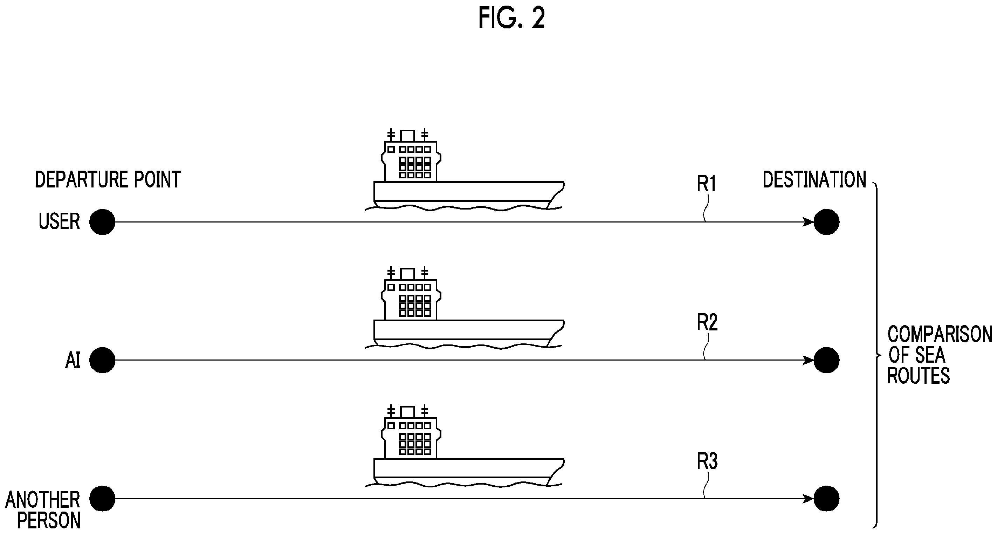

The created sea route acquisition unit 11 acquires a created sea route R1 (see FIG. 2) of the ship created by the user. The created sea route acquisition unit 11 acquires the created sea route R1 created by the user operating the input unit 2. Alternatively, in a case where the user creates a sea route with another terminal, the created sea route acquisition unit 11 may acquire the created sea route R1, for example, through a storage medium such as a memory or by downloading the sea route from a network. The created sea route R1 created by the user includes at least information such as a departure point, a destination, a waypoint, and which route to take. For example, when heading from Tokyo to New York, the created sea route acquisition unit 11 sets the departure point to "Tokyo" and the destination to "New York", and acquires information such as how to cross the Pacific Ocean.

The comparative sea route acquisition unit 12 acquires at least one of a sea route created by artificial intelligence (AI) and a sea route created in the past, as a comparative sea route. The comparative sea route acquisition unit 12 may acquire a comparative sea route R2 (see FIG. 2) by performing computation using artificial intelligence. In this case, the comparative sea route acquisition unit 12 has artificial intelligence that has been trained in advance using training data of a large number of past sea routes stored on the database 16. The artificial intelligence receives the input of information regarding navigation conditions, in addition to the same departure point, destination, and ship condition (size, weight of cargo, and the like) as those of the created sea route R1 created by the user, from the comparative sea route acquisition unit 12. The created sea route acquisition unit 11 acquires the result computed by the artificial intelligence using the input information, as a comparative sea route R2. Alternatively, the comparative sea route acquisition unit 12 may acquire a comparative sea route R3 (see FIG. 2) by selecting a sea route from among sea routes created in the past. The comparative sea route acquisition unit 12 collates information regarding navigation conditions, in addition to the same departure point, destination, and ship condition (size, weight of cargo, and the like) as those of the created sea route R1 created by the user with the data of the database 16 to select the comparative sea route R3. In a case where a plurality of sea routes having the same conditions are found, the comparative sea route acquisition unit 12 may acquire any sea route (for example, a sea route with the highest evaluation) as the comparative sea route R3. Alternatively, in a case where a sea route having the same conditions is not found from the database 16, the comparative sea route acquisition unit 12 may select a sea route having similar conditions and acquire the sea route of which the conditions have been adjusted by computation, as the comparative sea route R3.

Another terminal may create the comparative sea route R2 by artificial intelligence, or may select a past sea route as the comparative sea route R3. In this case, the comparative sea route acquisition unit 12 may acquire the comparative sea routes R2 and R3, for example, through a storage medium such as a memory or by downloading the sea routes from a network.

The evaluation unit 13 evaluates the created sea route R1 acquired by the created sea route acquisition unit 11. The evaluation unit 13 scores the evaluation of the created sea route R1. The scoring is the conversion of the good or bad of the evaluation into numbers. The evaluation unit 13 scores the evaluation of the created sea route R1 by comparing the comparative sea routes R2 and R3 with the created sea route R1 created by the user. The evaluation unit 13 outputs the evaluation result using the output unit 3. It should be noted that how the evaluation unit 13 outputs the evaluation to the user is not particularly limited. For example, the evaluation unit 13 may not score the evaluation, and output, for example, medals (gold, silver, bronze) or simple rankings that are not based on the scoring (the sea route of the own ship need only be compared with the other sea route) to the user, as the evaluation result.

The evaluation unit 13 computes each item to be evaluated for the created sea route R1 and the comparative sea routes R2 and R3. Examples of the item to be evaluated include "fuel consumption", "CO₂ emission quantity", "sulfur oxide (SOₓ) emission quantity", and "nitrogen oxide (NOₓ) emission quantity". The type of fuel may differ depending on the selection of the sea route. Therefore, the CO₂ emission quantity and the SOₓ or NOₓ emission quantity do not necessarily have a linear correlation with each other. Accordingly, the above evaluation item is added, so that more accurate evaluation is possible. The evaluation unit 13 compares the computation result of the created sea route R1 with the computation results of the comparative sea routes R2 and R3, for each item. The evaluation unit 13 determines whether the computation result of the created sea route R1 is better or worse than the computation results of the comparative sea routes R2 and R3, and scores how good or bad the computation result is. The evaluation unit 13 may show the computation result with a positive score in a case where the computation result of the created sea route R1 is better than the computation results of the comparative sea routes R2 and R3, and may increase the number as the computation result is better. The evaluation unit 13 may show the computation result with a negative score in a case where the computation result of the created sea route R1 is worse than the computation results of the comparative sea routes R2 and R3, and may increase the number as the computation result is worse. Further, the evaluation unit 13 calculates the score for each item and then computes a score in which all the items are comprehensively evaluated.

The method in which the evaluation unit 13 scores each item and the comprehensive evaluation is not particularly limited. For example, an evaluation reference table may be stored on the database, and the evaluation unit 13 may calculate the score by collating the computation result with the evaluation reference table. For example, in the evaluation reference table, the difference rate between the computation result of the created sea route R1 and the computation results of the comparative sea routes R2 and R3 may be associated with the size of the score. Alternatively, a mathematical expression that is used to calculate the score may be stored on the database, and the evaluation unit 13 may calculate the score using the mathematical expression.

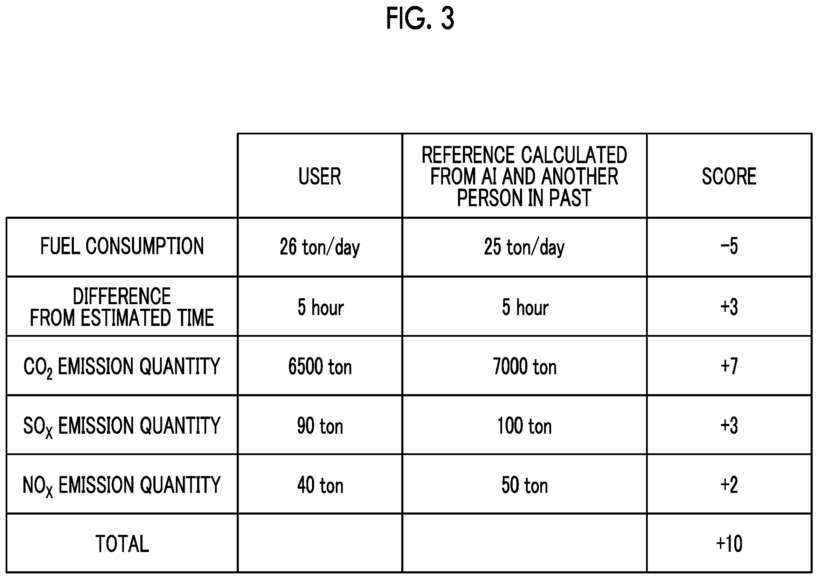

For example, the evaluation unit 13 may output the evaluation result as shown in FIG. 3, using the output unit 3. In the table of FIG. 3, the column of "user" shows the computation result of each item for the created sea route R1. The column of "reference calculated from AI and another person in past" shows the computation result of each item for the comparative sea routes R2 and R3. Here, a reference decided by arbitrarily selecting any one of the computation result of the comparative sea route R2, the computation result of the comparative sea route R3, and the average of the comparative sea route R2 and the comparative sea route R3 is shown. The score, which shows the computation result of each item for the comparative sea routes R2 and R3, is negative because the fuel consumption of the created sea route R1 is higher than the fuel consumption of the comparative sea routes R2 and R3. The score is positive because the difference from the estimated time of the created sea route R1 is smaller than the difference from the estimated time of the comparative sea routes R2 and R3. The score is positive because the CO₂ emission quantity of the created sea route R1 is smaller than the CO₂ emission quantity of the comparative sea routes R2 and R3. The evaluation unit 13 evaluates the effect of reducing the CO₂ emission quantity higher than the effect of reducing the difference from the estimated time, to give a higher score to the effect of reducing the CO₂ emission quantity. Further, the evaluation unit 13 computes the total of the score of each item as a comprehensive evaluation for each item.

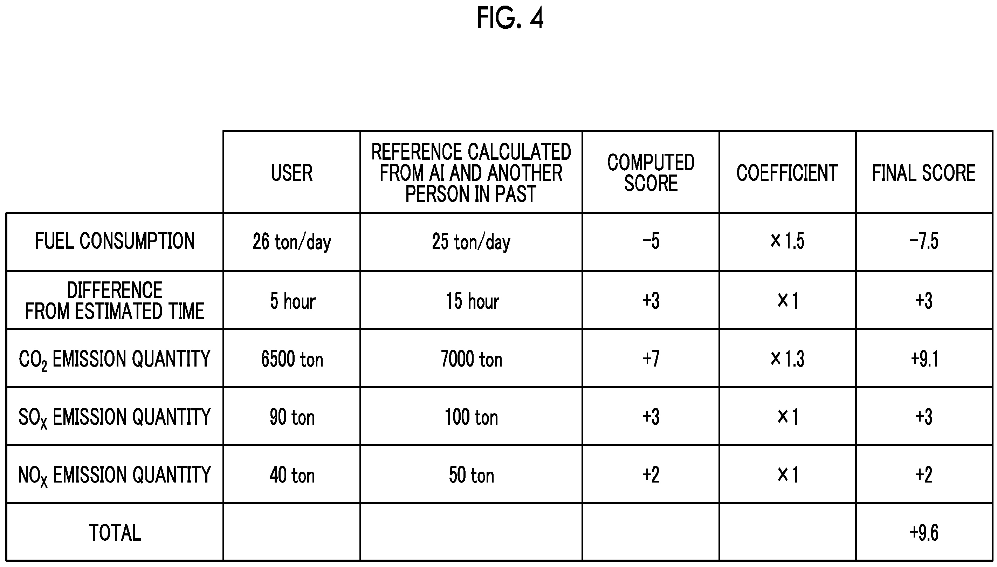

Further, the evaluation unit 13 may make a difference in the importance of each evaluation item by multiplying the computed score of each evaluation item by any coefficient to obtain the final score. For example, the output unit 3 may output the evaluation result as shown in FIG. 4. The evaluation unit 13 obtains the final score by multiplying each item of the evaluation result shown in FIG. 3 by an arbitrarily set coefficient.

The timing at which the evaluation unit 13 performs evaluation is not particularly limited. For example, the evaluation unit 13 may perform evaluation at the time of departure or before departure. In this case, since the created sea route R1 is a sea route before the created sea route R1 is used in actual navigation, the evaluation unit 13 computes the evaluation for the created sea route R1 based on the estimation. Alternatively, the evaluation unit 13 may perform evaluation after arrival at the destination. In this case, since the created sea route R1 is a sea route that has been used in the actual navigation, the evaluation unit 13 may evaluate the created sea route R1 based on the actual navigation result. For example, the evaluation unit 13 can evaluate the fuel consumption of the created sea route R1 based on the fuel actually used.

The navigation assistance information computation unit 14 computes navigation assistance information based on the score evaluated by the evaluation unit 13. The navigation assistance information is information that can be used to assist the user in navigating a ship. For example, the navigation assistance information computation unit 14 may output a comment regarding the created sea route R1 to the output unit 3 based on the score. For example, in a case where the evaluation of fuel consumption is low, the navigation assistance information computation unit 14 may output advice on which sea route should be set in order to improve fuel consumption. The navigation assistance information computation unit 14 may propose that it is better to adopt the comparative sea routes R2 and R3 instead of the created sea route R1. The navigation assistance information computation unit 14 may automatically correct the created sea route R1, for example, such that the created sea route R1 has a higher score and may propose the corrected sea route. In a case where the evaluation unit 13 performs evaluation before the start of the navigation or during the navigation, the navigation assistance information computation unit 14 may provide navigation assistance information in which the user can change/adjust the created sea route R1 based on the evaluation. In a case where the evaluation unit 13 performs evaluation after arrival at the destination, the navigation assistance information can be provided as information that can be useful for the next and subsequent navigation, to be used to assist the user in navigating the ship.

The database 16 stores information that is used to perform various processing in the sea route evaluation device 100. For example, the database 16 may store a plurality of past sea routes that are used to create the comparative sea route R3. The database 16 may store, for example, a plurality of evaluation reference tables that are used for the evaluation unit 13 to perform evaluation.

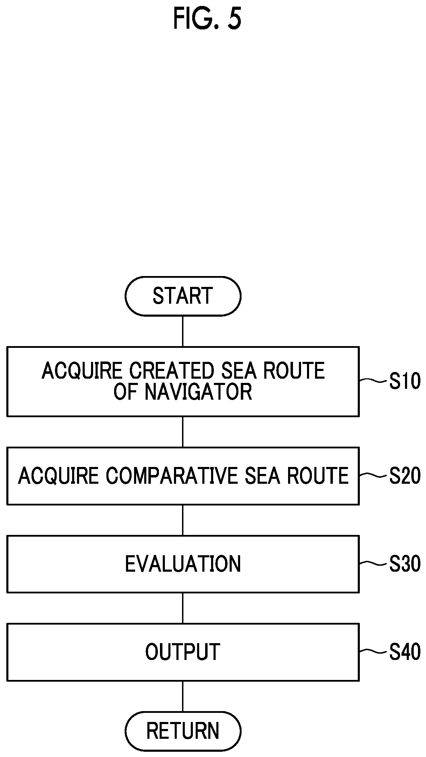

Next, the contents of a sea route evaluation method according to the present embodiment will be described with reference to FIG. 5. FIG. 5 is a flowchart showing processing contents of the sea route evaluation method according to the present embodiment. As shown in FIG. 5, the created sea route acquisition unit 11 acquires the created sea route R1 of the ship created by the user (step S10: created sea route acquisition step). Next, the comparative sea route acquisition unit 12 acquires the comparative sea routes R2 and R3 (step S20).

Next, the evaluation unit 13 evaluates the created sea route R1 acquired in the created sea route acquisition step S10 (step S30: evaluation step). In step S30, the evaluation unit 13 evaluates the created sea route R1 by comparing the created sea route R1 with the comparative sea routes R2 and R3. In the evaluation step S30, the evaluation of the created sea route R1 is scored. Next, the evaluation unit 13 outputs the evaluation result scored in the evaluation step S30 using the output unit 3 (step S40). As a result, the processing shown in FIG. 5 is completed.

Next, the operations and effects of the sea route evaluation device 100, the sea route evaluation program, and the sea route evaluation method according to the present embodiment will be described.

The sea route evaluation device 100 includes the evaluation unit 13 that evaluates the created sea route R1 acquired by the created sea route acquisition unit 11. Therefore, the evaluation unit 13 evaluates the created sea route R1 of the ship created by the user. Further, the evaluation unit 13 outputs the evaluation of the created sea route R1 to the user. Therefore, the user can easily identify the good or bad of the created sea route R1 created by himself/herself by referring to the evaluation result of the created sea route R1. In this way, the user identifies the evaluation of the created sea route R1 in an easy-to-understand manner, so that it is possible to increase the motivation of the user to create the sea route. It is also possible to use the score of the evaluation unit for the evaluation of a sailor.

The sea route evaluation device 100 further includes the comparative sea route acquisition unit 12 that acquires at least one of a sea route created by artificial intelligence and a sea route created in the past, as a comparative sea route, in which the evaluation unit 13 may compare the comparative sea route with the created sea route R1 created by the user to output the evaluation of the created sea route R1 to the user. With this, the user can identify the good or bad of the created sea route R1 created by himself/herself as compared with the comparative sea route R2 created by artificial intelligence or the comparative sea route R3 created in the past.

The sea route evaluation device 100 may further include the navigation assistance information computation unit 14 that computes navigation assistance information based on the evaluation result evaluated by the evaluation unit 13. With this, the user can acquire navigation assistance information based on the evaluation result, for the created sea route R1 created by himself/herself.

The sea route evaluation program according to the present embodiment causes a computer to execute the created sea route acquisition step S10 of acquiring the created sea route R1 of the ship created by the user, and the evaluation step S30 of evaluating the created sea route R1 acquired in the created sea route acquisition step S10, in which in the evaluation step S30, the evaluation of the created sea route R1 is output to the user.

The sea route evaluation method according to the present embodiment includes the created sea route acquisition step S10 of acquiring the created sea route R1 of the ship created by the user, and the evaluation step S30 of evaluating the created sea route R1 acquired in the created sea route acquisition step S10, in which in the evaluation step S30, the evaluation of the created sea route R1 is scored.

The present invention is not limited to the above-described embodiment.

### Brief Description of the Reference Symbols

11: created sea route acquisition unit
12: comparative sea route acquisition unit
13: evaluation unit
14: navigation assistance information computation unit
100: sea route evaluation device

## Claims

1. A sea route evaluation device (100) comprising:
a created sea route acquisition unit (11) adapted to acquire a sea route (R1) of a ship created by a user;
a comparative sea route acquisition unit (12) adapted to acquire at least one of a sea route (R2) created by artificial intelligence based on information regarding navigation conditions and the same departure point, destination, and ship condition as those of the sea route (R1) created by the user and a sea route (R3) created in the past by collating the information regarding navigation conditions and the same departure point, destination, and ship condition as those of the sea route (R1) created by the user with data stored in a database (16), as a comparative sea route (R2, R3); and
an evaluation unit (13) adapted to perform evaluation of the sea route (R1) acquired by the created sea route acquisition unit (11),
**characterized in that**
the evaluation unit (13) is adapted to score the evaluation of the sea route (R1) by comparing the comparative sea route (R2, R3) with the sea route (R1), and to output the evaluation of the sea route (R1),
the evaluation unit (13) is adapted to compute scores for, as an item to be evaluated, at least two of fuel consumption, CO₂ emission quantity, sulfur oxide emission quantity, and nitrogen oxide emission quantity, for the sea route (R1) and the comparative sea routes (R2, R3), and
the evaluation unit (13) is adapted to compute a total of the scores of the evaluated items, and to output the scores of the evaluated items and the total score.

2. The sea route evaluation device (100) according to claim 1, further comprising:
a navigation assistance information computation unit (14) adapted to
compute navigation assistance information based on an evaluation result by the evaluation unit (13), and
output a comment regarding the sea route (R1) based on the score of the evaluation, and
the comment includes at least one of a proposal that it is better to adopt the comparative sea routes (R2, R3) instead of the sea route (R1), and a proposal of a corrected sea route obtained by automatically correcting the sea route (R1) such that the sea route (R1) has a higher score.

3. A sea route evaluation program causing a computer to execute:
a created sea route acquisition step of acquiring a sea route (R1) of a ship created by a user;
a comparative sea route acquisition step of acquiring at least one of a sea route (R2) created by artificial intelligence based on information regarding navigation conditions and the same departure point, destination, and ship condition as those of the sea route (R1) created by the user and a sea route (R3) created in the past by collating the information regarding navigation conditions and the same departure point, destination, and ship condition as those of the sea route (R1) created by the user with data stored in a database (16), as a comparative sea route (R2, R3); and
an evaluation step of performing evaluation of the sea route (R1) acquired in the created sea route acquisition step,
**characterized in that**
in the evaluation step, the evaluation of the sea route (R1) is scored by comparing the comparative sea route (R2, R3) with the sea route (R1) and is output,
the evaluation step includes computing scores for, as an item to be evaluated, at least two of fuel consumption, CO₂ emission quantity, sulfur oxide emission quantity, and nitrogen oxide emission quantity, for the sea route (R1) and the comparative sea routes (R2, R3), and
the evaluation step further includes computing a total of the scores of the evaluated items, and outputting the scores of the evaluated items, and the total score.

4. A sea route evaluation method comprising:
a created sea route acquisition step of acquiring a sea route (R1) of a ship created by a user;
a comparative sea route acquisition step of acquiring at least one of a sea route (R2) created by artificial intelligence based on information regarding navigation conditions and the same departure point, destination, and ship condition as those of the sea route (R1) created by the user and a sea route (R3) created in the past by collating the information regarding navigation conditions and the same departure point, destination, and ship condition as those of the sea route (R1) created by the user with data stored in a database (16), as a comparative sea route (R2, R3); and
an evaluation step of performing evaluation of the sea route (R1) acquired in the created sea route acquisition step,
**characterized in that**
in the evaluation step, the evaluation of the sea route (R1) is scored by comparing the comparative sea route (R2, R3) with the sea route (R1) and is output,
the evaluation step includes computing scores for, as an item to be evaluated, at least two of fuel consumption, CO₂ emission quantity, sulfur oxide emission quantity, and nitrogen oxide emission quantity, for the sea route (R1) and the comparative sea routes (R2, R3), and
the evaluation step further includes computing a total of the scores of the evaluated items, and outputting the scores of the evaluated items, and the total score.

## Patentansprüche

1. Seerouten-Bewertungsvorrichtung (100) umfassend:
eine erstellte Seeroute-Erfassungseinheit (11), die dazu ausgelegt ist, eine Seeroute (R1) eines Schiffes, die von einem Benutzer erstellt wird, zu erfassen;
eine Vergleichsseeroute-Erfassungseinheit (12), die dazu ausgelegt ist, mindestens eine von einer Seeroute (R2), die von künstlicher Intelligenz auf Grundlage von Informationen betreffend Navigationsbedingungen und dem gleichen Abfahrtsort, Zielort und Schiffszustand wie diejenigen der Seeroute (R1), die von dem Benutzer erstellt wird, und einer Seeroute (R3), die in der Vergangenheit durch Zuordnen der Informationen betreffend Navigationsbedingungen und den gleichen Abfahrtsort, Zielort und Schiffszustand erstellt wurde, wie diejenigen der Seeroute (R1), die von dem Benutzer mit Daten, die in einer Datenbank (16) gespeichert sind, erstellt wird, als eine Vergleichsseeroute (R2, R3) zu erfassen; und
eine Bewertungseinheit (13), die ausgelegt ist, Bewertung der Seeroute (R1), die von der erstellten Seeroute-Erfassungseinheit (11) erfasst wird, durchzuführen,
**dadurch gekennzeichnet, dass**
die Bewertungseinheit (13) ausgelegt ist, die Bewertung der Seeroute (R1) durch Vergleichen der Vergleichsseeroute (R2, R3) mit der Seeroute (R1) zu bewerten, und die Bewertung der Seeroute (R1) auszugeben,
die Bewertungseinheit (13) ausgelegt ist, Bewertungswerte für, als ein Element, das bewertet werden soll, mindestens zwei von Kraftstoffverbrauch, CO₂-Emissionsmenge, Schwefeloxid-Emissionsmenge, und Stickstoffoxid-Emissionsmenge, für die Seeroute (R1) und die Vergleichsseerouten (R2, R3), zu berechnen, und
die Bewertungseinheit (13) ausgelegt ist, eine Summe der Bewertungswerte der bewerteten Elemente zu berechnen, und die Bewertungswerte der bewerteten Elemente und den Gesamtbewertungswert auszugeben.

2. Seerouten-Bewertungsvorrichtung (100) nach Anspruch 1, ferner umfassend:
eine Navigationsunterstützungsinformationen-Berechnungseinheit (14), die ausgelegt ist,
Navigationsunterstützungsinformationen auf Grundlage eines Bewertungsergebnisses der Bewertungseinheit (13) zu berechnen, und
einen Kommentar betreffend die Seeroute (R1) auf Grundlage des Bewertungswerts der Bewertung auszugeben, und
der Kommentar mindestens einen von einem Vorschlag, dass es besser ist, die Vergleichsseerouten (R2, R3) anstelle der Seeroute (R1) zu verwenden, enthält, und einen Vorschlag einer korrigierten Seeroute, die durch automatisches Korrigieren der Seeroute (R1) erhalten wird, so dass die Seeroute (R1) einen höheren Bewertungswert hat.

3. Ein Seeroute-Bewertungsprogramm, das einen Computer veranlasst, auszuführen:
einen erstellte Seeroute-Erfassungsschritt von Erfassen einer Seeroute (R1) eines Schiffes, die von einem Benutzer erstellt wird;
einen Vergleichsseeroute-Erfassungsschritt von Erfassen mindestens eines von einer Seeroute (R2), die durch künstliche Intelligenz auf Grundlage von Informationen betreffend Navigationsbedingungen und den gleichen Abfahrtsort, Zielort und Schiffszustand erstellt wird, wie diejenigen der Seeroute (R1), die von dem Benutzer erstellt wird, und eine Seeroute (R3), die in der Vergangenheit erstellt wurde durch Zuordnen der Informationen betreffend Navigationsbedingungen und den gleichen Abfahrtsort, Zielort und Schiffszustand wie diejenigen der Seeroute (R1), die von dem Benutzer mit Daten, die in einer Datenbank (16) gespeichert sind, erstellt wird, als eine Vergleichsseeroute (R2, R3); und
einen Bewertungsschritt zum Durchführen von Bewertung der Seeroute (R1), die in dem erstellte Seeroute-Erfassungsschritt erfasst wird,
**dadurch gekennzeichnet, dass**
bei dem Bewertungsschritt die Bewertung der Seeroute (R1) durch Vergleichen der Vergleichsseeroute (R2, R3) mit der Seeroute (R1) bewertet wird und ausgegeben wird,
der Bewertungsschritt Berechnen von Bewertungswerten für, als ein Element, das bewertet werden soll, mindestens zwei von Kraftstoffverbrauch, CO₂-Emissionsmenge, Schwefeloxid-Emissionsmenge und Stickstoffoxid-Emissionsmenge, für die Seeroute (R1) und die Vergleichsseerouten (R2, R3) umfasst, und
der Bewertungsschritt ferner Berechnen einer Summe der Bewertungswerte der bewerteten Elemente, und Ausgeben der Bewertungen der bewerteten Elemente, und des Gesamtbewertungswerts umfasst.

4. Seeroute-Bewertungsverfahren, umfassend:
einen erstellte Seeroute-Erfassungsschritt zum Erfassen einer Seeroute (R1) eines Schiffes, die von einem Benutzer erstellt wird;
einen Vergleichsseeroute-Erfassungsschritt zum Erfassen von mindestens einer von einer Seeroute (R2), die von künstlicher Intelligenz auf Grundlage von Informationen betreffend Navigationsbedingungen und dem gleichen Abfahrtsort, Zielort und Schiffszustand wie diejenigen der Seeroute (R1), die von dem Benutzer erstellt wird, und einer Seeroute (R3), die in der Vergangenheit durch Zuordnen der Informationen betreffend Navigationsbedingungen und den gleichen Abfahrtsort, Zielort und Schiffszustand, erstellt wurde, wie diejenigen der Seeroute (R1), die von dem Benutzer mit Daten, die in einer Datenbank (16) gespeichert sind, erstellt wird, als eine Vergleichsseeroute (R2, R3); und
einen Bewertungsschritt zum Durchführen von Bewertung der Seeroute (R1), die in dem erstellte Seeroute-Erfassungsschritt erfasst wird,
**dadurch gekennzeichnet, dass**
bei dem Bewertungsschritt die Bewertung der Seeroute (R1) durch Vergleichen der Vergleichsseeroute (R2, R3) mit der Seeroute (R1) bewertet wird und ausgegeben wird,
der Bewertungsschritt Berechnen von Bewertungswerten für, als ein Element, das bewertet werden soll, mindestens zwei von Kraftstoffverbrauch, CO₂-Emissionsmenge, Schwefeloxid-Emissionsmenge und Stickstoffoxid-Emissionsmenge für die Seeroute (R1) und die Vergleichsseerouten (R2, R3) umfasst, und
der Bewertungsschritt ferner Berechnen einer Summe der Bewertungswerte der bewerteten Elemente und Ausgeben der Bewertungswerte der bewerteten Elemente und des Gesamtbewertungswerts umfasst.

## Revendications

1. Un dispositif d'évaluation de route maritime (100) comprenant :
une unité d'acquisition de route maritime créée (11) adaptée pour acquérir une route maritime (R1) d'un navire créée par un utilisateur ;
une unité d'acquisition de route maritime comparative (12) adaptée pour acquérir au moins l'une d'une route maritime (R2) créée par intelligence artificielle sur la base d'informations relatives aux conditions de navigation et du même point de départ, de la même destination et du même état du navire que ceux de la route maritime (R1) créée par l'utilisateur et d'une route maritime (R3) créée par le passé en recoupant les informations relatives aux conditions de navigation et le même point de départ, la même destination et le même état du navire que ceux de la route maritime (R1) créée par l'utilisateur avec des données stockées dans une base de données (16), en tant que route maritime comparative (R2, R3) ; et
une unité d'évaluation (13) adaptée pour effectuer l'évaluation de la route maritime (R1) acquise par l'unité d'acquisition de route maritime créée (11),
**caractérisé en ce que**
l'unité d'évaluation (13) est adaptée pour attribuer un score à l'évaluation de la route maritime (R1) en comparant la route maritime comparative (R2, R3) avec la route maritime (R1), et pour délivrer l'évaluation de la route maritime (R1),
l'unité d'évaluation (13) est adaptée pour calculer des scores pour, en tant qu'élément à évaluer, au moins deux parmi la consommation de carburant, la quantité d'émission de CO₂, la quantité d'émission d'oxyde de soufre et la quantité d'émission d'oxyde d'azote, pour la route maritime (R1) et les routes maritimes comparatives (R2, R3), et
l'unité d'évaluation (13) est adaptée pour calculer un total des scores des éléments évalués, et pour délivrer les scores des éléments évalués et le score total.

2. Le dispositif d'évaluation de route maritime (100) selon la revendication 1, comprenant en outre :
une unité de calcul d'informations d'aide à la navigation (14) adaptée pour
calculer des informations d'aide à la navigation sur la base d'un résultat d'évaluation par l'unité d'évaluation (13), et
délivrer un commentaire relatif à la route maritime (R1) sur la base du score de l'évaluation, et
le commentaire comprend au moins l'une d'une proposition selon laquelle il est préférable d'adopter les routes maritimes comparatives (R2, R3) au lieu de la route maritime (R1), et d'une proposition d'une route maritime corrigée obtenue en corrigeant automatiquement la route maritime (R1) de sorte que la route maritime (R1) ait un score plus élevé.

3. Un programme d'évaluation de route maritime amenant un ordinateur à exécuter :
une étape d'acquisition de route maritime créée qui consiste à acquérir une route maritime (R1) d'un navire créée par un utilisateur ;
une étape d'acquisition de route maritime comparative qui consiste à acquérir au moins l'une d'une route maritime (R2) créée par intelligence artificielle sur la base d'informations relatives aux conditions de navigation et du même point de départ, de la même destination et du même état du navire que ceux de la route maritime (R1) créée par l'utilisateur et d'une route maritime (R3) créée par le passé en recoupant les informations relatives aux conditions de navigation et le même point de départ, la même destination et le même état du navire que ceux de la route maritime (R1) créée par l'utilisateur avec des données stockées dans une base de données (16), en tant que route maritime comparative (R2, R3) ; et
une étape d'évaluation qui consiste à effectuer l'évaluation de la route maritime (R1) acquise lors de l'étape d'acquisition de route maritime créée,
**caractérisé en ce que**
à l'étape d'évaluation, l'évaluation de la route maritime (R1) se voit attribuer un score en comparant la route maritime comparative (R2, R3) avec la route maritime (R1), et est délivrée,
l'étape d'évaluation comprend le calcul de scores pour, en tant qu'élément à évaluer, au moins deux parmi la consommation de carburant, la quantité d'émission de CO₂, la quantité d'émission d'oxyde de soufre et la quantité d'émission d'oxyde d'azote, pour la route maritime (R1) et les routes maritimes comparatives (R2, R3), et
l'étape d'évaluation comprend en outre le calcul d'un total des scores des éléments évalués, et la délivrance des scores des éléments évalués et du score total.

4. Une méthode d'évaluation de route maritime comprenant :
une étape d'acquisition de route maritime créée qui consiste à acquérir une route maritime (R1) d'un navire créée par un utilisateur ;
une étape d'acquisition de route maritime comparative qui consiste à acquérir au moins l'une d'une route maritime (R2) créée par intelligence artificielle sur la base d'informations relatives aux conditions de navigation et du même point de départ, de la même destination et du même état du navire que ceux de la route maritime (R1) créée par l'utilisateur et d'une route maritime (R3) créée par le passé en recoupant les informations relatives aux conditions de navigation et le même point de départ, la même destination et le même état du navire que ceux de la route maritime (R1) créée par l'utilisateur avec des données stockées dans une base de données (16), en tant que route maritime comparative (R2, R3) ; et
une étape d'évaluation qui consiste à effectuer l'évaluation de la route maritime (R1) acquise lors de l'étape d'acquisition de route maritime créée,
**caractérisé en ce que**
à l'étape d'évaluation, l'évaluation de la route maritime (R1) se voit attribuer un score en comparant la route maritime comparative (R2, R3) avec la route maritime (R1), et est délivrée,
l'étape d'évaluation comprend le calcul de scores pour, en tant qu'élément à évaluer, au moins deux parmi la consommation de carburant, la quantité d'émission de CO₂, la quantité d'émission d'oxyde de soufre et la quantité d'émission d'oxyde d'azote, pour la route maritime (R1) et les routes maritimes comparatives (R2, R3), et
l'étape d'évaluation comprend en outre le calcul d'un total des scores des éléments évalués, et la délivrance des scores des éléments évalués, et du score total.
